# EUROPEAN PATENT APPLICATION

(11) **EP 2 735 940 A1**
(43) Date of publication of application: **28.05.2014**
(21) Application number: 12193938.3
(22) Date of filing: 23.11.2012
(51) Int. Cl.: G06F 3/023, G10L 15/28, G06F 3/16

(54) **Modifying key functionality based on context and input associated with a user interface**

(71) Applicant: BlackBerry Limited, Waterloo, ON N2K 0A7 (CA)
(72) Inventor: Griffin, Jason Tyler, Waterloo, ON N2L 3W8 (CA); White, Thaddeus Clark, Waterloo, ON N2L 3W8 (CA)
(74) Representative: Noble, Nicholas

(57) **Abstract**

Methods and devices are provided for modifying key (232) functionality based on context of a user interface. A system configured to practice the method presents a graphical user interface, the graphical user interface providing a user interface element for data entry, and analyzes a user interaction via the user interface element and a context of the user interaction within the user interface element. Based on the user interaction and the context, the system activates a non-default mode for a key (232) having a default mode. The key (232) can be a physical key (232) or a key in a virtual on-display (222) keyboard. The default mode can be inserting a character such as a period or a comma, and the non-default mode can be launching voice input. The system receives, via the key (232), input directed to the user interface element, and performs an action associated with the non-default mode in response to the input.

## Description

### FIELD OF THE DISCLOSURE

This disclosure relates generally to human interface devices, and more particularly to efficient use of a key having multiple functions based on a context of user interaction.

### BACKGROUND

Mobile device technology has trended toward 'slab' phones and tablets with virtual, on-display keyboards in which a mobile device displays a virtual keyboard on a touch sensitive display as a collection of displayed buttons. A user provides input through the on-screen display by tapping or touching the displayed buttons. However, space on such virtual keyboards is constrained by the factors such as size and resolution of the display. Usability constraints limit the size of the keys in the virtual keyboard because users' fingers are a certain size and the keys should be large enough for a user to tap a key with a finger easily and without missing the intended key or hitting a neighboring key. Thus, the total number of keys on a virtual keyboard is limited.

One way to provide additional functionality with a limited number of keys is to provide a shift, alternate, or special key, which allows a user to toggle between different sets of keys such as between lower case keys and upper case keys, or between alphabetical keys and numeric keys. Another approach is to increase the display size to provide space for displaying additional keys. However, this approach can be problematic beyond a certain point, as the additional display size translates to larger devices which are less portable and which have higher power consumption due to the larger backlight for the display. Thus, current devices can only provide a limited amount of functionality for on-display virtual keyboards, which forces certain implementation tradeoffs.

### BRIEF DESCRIPTION OF THE DRA WINGS

FIG. 1 illustrates an example communication system for mobile communication devices;

FIG. 2 illustrates an example mobile communication device;

FIG. 3 illustrates a block diagram of the mobile communication device illustrated in FIG. 2 operating in an example communication environment;

FIG. 4 illustrates an example mobile communication device having a graphical user interface and a keyboard;

FIG. 5 illustrates an example blank text input box in a user interface;

FIG. 6 illustrates an example populated text input box in a user interface;

FIG. 7 illustrates example graphical buttons in various operating modes;

FIG. 8 illustrates an example text input box with different views of a button at different times; and

FIG. 9 illustrates a flow chart illustrating a process of alternating an operating mode of a key based on context.

### DETAILED DESCRIPTION

This disclosure provides a virtual on-display keyboard including a key having functionality that changes based on context of user input directed to a non-keyboard portion of a graphical user interface. In one embodiment, a mobile device with a touch sensitive display shows a user interface on one portion of the display and a virtual keyboard on another portion of the display. The virtual keyboard includes a period key for inserting the punctuation mark period. However, when the user taps in to an empty text field on the user interface or the first position of a text field, the user is highly unlikely to type a period. Thus, the mobile device can repurpose the period key when the user taps in the text field or some other event changes focus to the text field. For example, the mobile device can change the period key to a voice input key. When the user presses the repurposed period key, the mobile device does not insert a period in to the text field, but instead initiates voice input for transcribing speech into text for inserting in the text field. However, if the user does not press the repurposed period key and instead presses some other key such as beginning to type the word "Hello", then the mobile device reverts the functionality of the repurposed period key back so that it inserts a period in to the text field and does not trigger voice input.

In this way, the mobile device can repurpose the period key based on a graphical user interface context or based on a non-keyboard event for an interface element. In this way, the mobile device can save space on the virtual keyboard by multiplexing, toggling, or cycling through multiple different functionality modes for a particular key. In this example embodiment, the key has two different functionality modes, a period and voice input, but a single key can be associated with two or more functionality modes. Because this approach relies on context within the user interface, the mobile device does not rely solely on a user providing separate explicit input to change functionality of one or more keys, such as the user pressing a shift, alt, or symbol key on the keyboard. Multiplexing functionality modes for a single key can reduce the number of overall required keys, thereby saving space or enabling a larger size for individual keys in the virtual keyboard. This can provide a benefit for users of such virtual keyboards because fewer keys can reduce clutter in the virtual keyboard, can provide for increased key sizes which are better for touch interfaces, and can reduce the amount of time a user must search to find a key he or she is looking for. While this embodiment provides an example of an on-display virtual keyboard, the same principles of modifying a functionality mode of a key based on context within the user interface can be applied to physical keys that are not part of a virtual keyboard.

The mobile device can alter the appearance of a key in an on-display virtual keyboard to indicate the change in functionality mode for the key or the potential change in functionality mode. For example, the mobile device can display on the key a period and, upon a change to a voice input functionality mode, can alter the key to display an icon representing a microphone. The mobile device can alter not only what is displayed on the key, but can also alter other aspects of the key in the on-display virtual keyboard, such as changing the size, color, shape, border, shading, color scheme, location, or other attributes of the key. The mobile device can optionally introduce animation or other motion when the non-default functionality mode is activated so that the key shakes, wobbles, slides side to side, grows, shrinks, pulses, glows, etc. The mobile device can introduce an initial animation upon the functionality mode change to draw the user's attention to the change, after which the mobile device can stop the animation or transition to a different animation or different temporary visual style for the key. Although not all physical keys have similar display capabilities as virtual keys, the mobile device can still provide a visual indication of a change of functionality mode for physical keys, such as by enabling a backlight for a changed key or changing the intensity, color, or illumination pattern (i.e. blinking) for a changed key. Thus, a physical period key could be backlit with solid white light, and the mobile device can change the physical period key to a blinking green backlight to indicate a change to a voice input functionality mode. The mobile device can provide some kind of brief graphical overlay on top of the display to indicate the shift in functionality mode and with which key the shift is associated. Further, the mobile device can vibrate, produce a sound, or provide some other non-visual indication of the changed functionality mode.

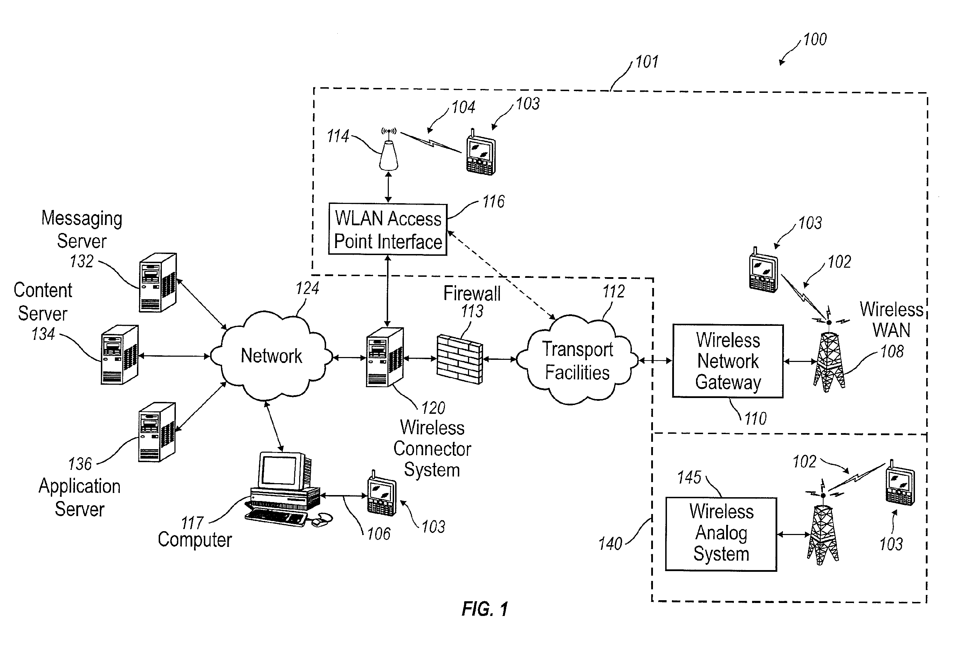

FIGs. 1-3 provide background information describing different embodiments of mobile devices, as well as operating environments and communication networks within which such mobile devices can operate. FIG. 1 illustrates an example of an operating environment for a communication system 100 that may include a number of mobile communication devices 103. The communication system 100 supports the mobile communication devices 103 in any of several different ways. The mobile communication devices 103 may be communicatively coupled to wireless digital networks 101, such as one or more of a Wireless Wide Area Network (WWAN) 102 and a Wireless Local Area Network (WLAN) 104, among other suitable network arrangements. In some examples, the mobile communication devices 103 are configured to communicate over the WWAN 102, the WLAN 104, or to roam between these networks. In some examples, the wireless digital networks 101 may comprise multiple WWANs 102 and WLANs 104, among other configurations.

The WWAN 102 may be implemented as any suitable wireless access network technology. By way of example, but not limitation, the WWAN 102 may be implemented as a wireless digital network that includes a number of transceiver base stations 108 (one of which is shown in FIG. 1), where each of the base stations 108 provide wireless Radio Frequency (RF) coverage to a corresponding area or cell. The WWAN 102 typically is operated by a mobile network service provider that provides subscription packages to users of the mobile communication devices 103.

In some examples, the WWAN 102 may conform to one or more of the following wireless network types: LTE (Long Term Evolution); Mobitex Radio Network; DataTAC; GSM (Global System for Mobile Communication); GPRS (General Packet Radio System); TDMA (Time Division Multiple Access); CDMA (Code Division Multiple Access); CDPD (Cellular Digital Packet Data); iDEN (integrated Digital Enhanced Network); Ev-DO (Evolution-Data Optimized); CDMA2000; EDGE (Enhanced Data rates for GSM Evolution); UMTS (Universal Mobile Telecommunication Systems); HSPDA (High-Speed Downlink Packet Access); IEEE 802.16e (also referred to as Worldwide Interoperability for Microwave Access or "WiMAX"), or various other networks. While WWAN 102 is described herein as a "Wide-Area" network, that term is intended also to incorporate wireless Metropolitan Area Networks (WMAN) or other similar technologies for providing coordinated service wirelessly over an area larger than that covered by typical WLANs.

The WWAN 102 may communicate with a wireless network gateway 110 that couples the mobile communication devices 103 to transport facilities 112. The transport facilities 112 couple the mobile communication devices 103 to a wireless connector system 120. The transport facilities 112 may include one or more private networks or lines, the Internet, a virtual private network, or any other suitable network, among other transport facilities. The wireless connector system 120 may be operated, for example, by an organization or enterprise such as a corporation, university, or governmental department, among other organizations or enterprises, which allow access to a network 124, such as an internal or enterprise network (e.g., an intranet) and its resources. Alternatively, the wireless connector system 120 may be operated by a mobile network provider. In some examples, the network 124 may be realized using the Internet rather than, or in addition to, an internal or enterprise network.

The wireless network gateway 110 provides an interface between the wireless connector system 120 and the WWAN 102. The wireless network gateway 110 facilitates communication between the mobile communication devices 103 and other devices (not shown) that may be connected, directly or indirectly, to the WWAN 102. Accordingly, communications sent via the mobile communication devices 103 are transported via the WWAN 102, the wireless network gateway 110 and the transport facilities 112 to the wireless connector system 120. Communications sent from the wireless connector system 120 are received by the wireless network gateway 110 and transported via the WWAN 102 to the mobile communication devices 103.

According to one example, the WLAN 104 includes a wireless digital network that conforms to IEEE 802.11x standards (sometimes referred to as Wi-Fi^{™}) such as, for example, the IEEE 802.11a, 802.11b and/or 802.11g standard. One of ordinary skill in the art will readily appreciate that other communication protocols may be used for the WLAN 104, such as, IEEE 802.11n, IEEE 802.16e (also referred to as Worldwide Interoperability for Microwave Access or "WiMAX"), or IEEE 802.20 (also referred to as Mobile Wireless Broadband Access), among other communication protocols. The WLAN 104 includes one or more wireless RF Access Points (AP) 114 (one of which is shown in FIG. 1) that collectively provide a WLAN coverage area.

The WLAN 104 may be a user's personal network, an enterprise network, or a hotspot offered by an Internet service provider (ISP), a mobile network provider, or a property owner in a public or semi-public area, for example. The access points 114 may be connected to an access point (AP) interface 116 that may connect to the wireless connector system 120 directly or indirectly. A direct connection may be provided when the access point 114 is part of an enterprise WLAN 104 in which the wireless connector system 120 resides. An indirect connection may be provided via the transport facilities 112, as indicated by the dashed signal line in FIG. 1, if the access point 114 is a personal Wi-Fi network or Wi-Fi hotspot. In this case, a mechanism, such as a virtual private network (VPN), may be used for securely connecting to the wireless connector system 120. The AP interface 116 may provide translation and routing services between the access points 114 and the wireless connector system 120 to facilitate communication, directly or indirectly, with the wireless connector system 120.

The wireless connector system 120 may be implemented as one or more servers, and is typically located behind a firewall 113. The wireless connector system 120 manages communications, including email, Hypertext Transfer Protocol (HTTP), and HTTP Secure (HTTPS) communications to and from a set of managed mobile communication devices 103. The wireless connector system 120 also provides administrative control and management capabilities over users and mobile communication devices 103 that may connect to the wireless connector system 120.

The mobile communication devices 103 also may be communicatively coupled to wireless over-the-air networks 140, such as an analog system, a Frequency Modulation (FM) broadcast system 145 or an Amplitude Modulation (AM) system, among other suitable analog network arrangements. A mobile communication device 103 may receive over-the-air broadcasts from the analog FM broadcast system 145 which covers a local geographic region, without requiring a subscription-based data plan or a password protected data transmission schemes. The analog FM broadcast system 145 provides a relatively large coverage, low data rates, low power consumption, and low component costs as compared to wireless digital networks 101.

The wireless connector system 120 allows the mobile communication devices 103 to access the network 124 and connected resources and services, such as a messaging server 132; a content server 134 that provides content, such as Internet content or content from an organization's internal servers; application servers 136 that implement server-based applications, and intranet file services; among other connected resources and services. The application servers 136 communicate with applications on the mobile communication devices 103, including the radio application that captures and stores FM signals from analog FM transmissions.

The network 124 may comprise a private local area network (LAN), metropolitan area network (MAN), wide area network (WAN), the public Internet or combinations thereof. The network 124 may include virtual networks constructed using any of these networks, alone or in combination. Alternatively, the mobile communication device 103 may connect to the wireless connector system 120 using a computer 117, such as a desktop or a notebook computer, via the network 124. A link 106 may be provided between the mobile communication device 103 and the computer 117 for exchanging information between the mobile communication device 103 and a computer 117 connected to the wireless connector system 120. The link 106 may include one or both of a physical interface or a short-range wireless communication interface.

The physical interface may comprise one or a combination of an Ethernet connection, a Universal Serial Bus (USB) connection, a Firewire^{™} (also known as an IEEE 1394 interface) connection, or other serial data connections, via respective ports or interfaces of the mobile communication device 103 and the computer 117. The short-range wireless communication interface may be a personal area network (PAN) interface. A PAN is a wireless point-to-point connection implemented without physical cables to connect the two end points. The short-range wireless communication interface may include one or a combination of an infrared (IR) connection, such as an Infrared Data Association (IrDA) connection, a short-range radio frequency (RF) connection, such as one specified by IEEE 802.15.1 or the BLUETOOTH special interest group, or IEEE 802.15.3a, also referred to as UltraWideband (UWB), or other PAN connection.

The wireless network gateway 110 is configured to send data packets received at the mobile communication device 103 over the WWAN 102 to the wireless connector system 120. The wireless connector system 120 then sends the data packets to the appropriate connection point such as a messaging server 132 or a content server 134 or an application server 136, or a combination of these. Conversely, the wireless connector system 120 may send data packets received from the messaging server 132, the content servers 134, the application servers 136 or any combination of these, to the wireless network gateway 110 for transmission to a selected mobile communication device 103. The WLAN AP interfaces 116 associated with the WLAN 104 provides similar transmission functions between the mobile communication device 103, the wireless connector system 120 and network connection point, such as the messaging server 132, the content server 134, the application server 136, or any combination of these.

It will be appreciated that the above-described communication system 100 is provided for illustration purposes only. The above-described communication system 100 may be implemented using any of a multitude of network configurations for use with the mobile communication devices 103. Suitable variations of the communication system 100 will be readily appreciated by a person of ordinary skill in the art and are intended to fall within the scope of the present disclosure.

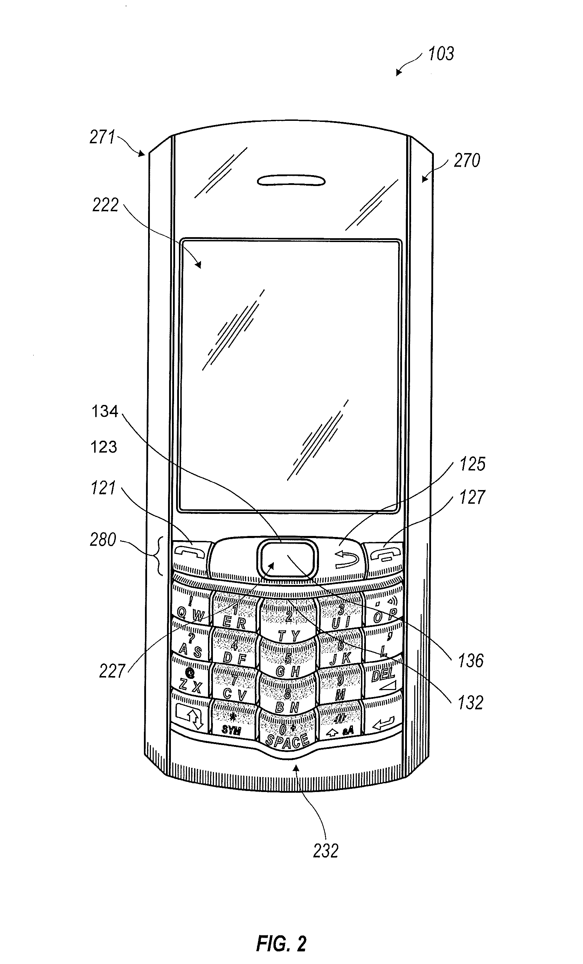

FIG. 2 illustrates an example of a mobile communication device 103 having a display 222 positioned above a keyboard 232 or other suitable device for accommodating textual input to the mobile communication device 103. In accordance with an aspect of the disclosure, the mobile communication device 103 may include a front face 270 having a navigation row 280. As shown, the mobile communication device 103 may include a "unibody" structure, also known to those skilled in the art as a "candy-bar" design.

The mobile communication device 103 may include an input device 227 that acts as a cursor navigation tool. The input device 227 may be exteriorly located upon the front face 270 of the mobile communication device 103. The location of input device 227 on the front face 270 allows the cursor navigation tool to be thumb-actuable, e.g., like the keys of the keyboard 232. Some examples provide the input device 227 in the form of an optical navigation tool that may be utilized to instruct two-dimensional screen cursor movement in substantially any direction. The input device 227 may act as an actuator when the cursor navigation tool is depressed like a button. Other examples may provide the input device 227 in the form of a track pad, a touchpad, a trackball, a pointing stick, a joystick, a graphics tablet, or the like. The input device 227 may be placed above the keyboard 232 and below the display 222. In this location, the input device 227 may avoid interference during data entry and does not block the operator's view of the display screen 222 during use.

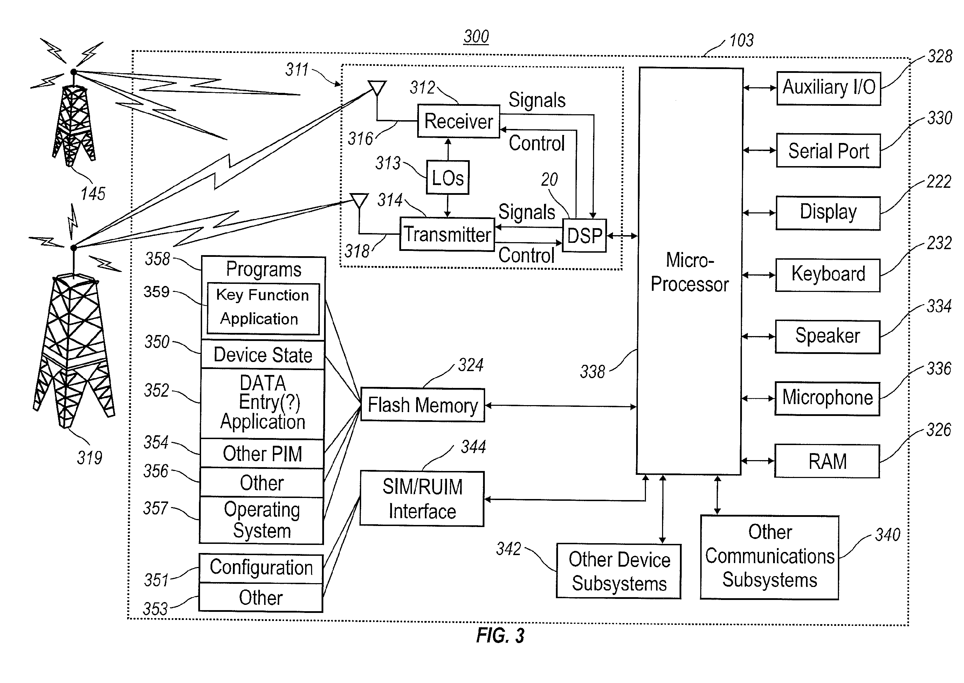

FIG. 3 illustrates a block diagram 300 of the mobile communication device 103 in accordance with one example. The mobile communication device 103 includes a microprocessor 338 that controls operations of the mobile communication device 103. A communication subsystem 311 is provided to perform communications, including transmission and reception of analog data and digital data via the wireless digital communication network 319 and a wireless analog broadcast system 145. The communication subsystem 311 may support short range digital communication systems, such as a BLUETOOTH^{®} communication module or a WI-FI^{™} communication module. The WI-FI^{™} communication module may comply with IEEE 802.11x, and associated circuits and components.

Alternatively, the communication subsystem 340 may include a short range communication system, such as a BLUETOOTH^{®} communication module or a WI-FI^{™} communication module, such as a communication module in compliance with IEEE 802.11b, and associated circuits and components. Additionally, the microprocessor 338 may be configured to perform operating system functions that enable execution of programs on the mobile communication device 103.

The microprocessor 338 is configured with operating system functionality to enable program execution on the mobile communication device 103. For example, the microprocessor 338 may be communicatively coupled to an auxiliary input/output (I/O) subsystem 328 and a serial port 330, such as a Universal Serial Bus port, which enables communications with other devices or systems. The display 222 may be communicatively coupled to the microprocessor 338 to display a GUI on the mobile communication device 103. When the mobile communication device 103 is equipped with a keyboard 232, the keyboard 232 also may be communicatively coupled with the microprocessor 338. The mobile communication device 103 may include a speaker 334, a microphone 336, a random access memory (RAM) 326, and a flash memory 324, among other components. These components may be communicatively coupled to the microprocessor 338. One of ordinary skill will appreciate that fewer components may be included in the mobile communication device 103. For example, the keyboard 232 may be a virtual keyboard that is integrated with a touch screen rather than being provided as a separate component.

The auxiliary I/O subsystem 328 may take the form of a variety of different navigation tools, including multi-directional or single-directional navigation tools. The navigation tools may include an optical navigation tool, a trackball navigation tool, a thumbwheel, a navigation pad, a joystick or a touch-sensitive interface, among other I/O interfaces. According to one example, the navigation tool may include the optical navigation tool 227 illustrated in FIG. 2. The navigation tool may be located on the front surface of the mobile communication device 103 or may be located on any exterior surface of the mobile communication device 103.

Other auxiliary I/O subsystems may include external display devices and externally connected keyboards (not shown). While the above examples have been provided in relation to the auxiliary I/O subsystem 328, other subsystems capable of providing input or receiving output from the mobile communication device 103 are considered within the scope of this disclosure. Additionally, other keys may be placed along the side of the mobile communication device 103 to function as escape keys, volume control keys, scrolling keys, power switches, or user programmable keys, and may likewise be programmed accordingly.

The keyboard 232 may include a plurality of keys that are physical in nature, such as actuable buttons. Alternatively, the keyboard 232 may be implemented as a virtual keyboard with software instructions provided to represent physical keys (referred to herein as "virtual keys") on the display 222. It is also contemplated that user input may be provided as a combination of these two types of keys. Each key of the plurality of keys may be associated with at least one action, which may be the input of a character, a command or a function, among other actions. In this context, "characters" are contemplated to include, for example, alphabetic letters, language symbols, numbers, punctuation, insignias, icons, pictures, or blank space, among other characters.

In the case of virtual keys, the indicia for the respective keys may be shown on the display screen 222. According to one example, the virtual keys may be selected by touching the display screen 222. A stylus, finger, or other pointer may be used to generate a desired character or activate an indicated command or function. Some examples of display screens 222 that are capable of detecting touch include resistive, capacitive, projected capacitive, infrared and surface acoustic wave (SAW) touch screens. Physical and virtual keys may be combined in many different ways, as appreciated by those skilled in the art.

The mobile communication device 103 may be equipped with components that enable operation of various programs. A flash memory 324 may be provided to store an operating system 357, device programs 358, and data. The device programs 358 may include the key function application 359, which is described further below. The operating system 357 is generally configured to manage the programs 358. The programs 358 may be stored in the flash memory 324 and may be executed on the microprocessor 338. The operating system 357 honors requests for services made by the programs 358 through predefined program interfaces, among other request types. More specifically, the operating system 357 typically determines the order in which the multiple programs 358 are executed on the microprocessor 338. The operating system 357 also determines an execution time allotted to each program 358, manages sharing of the flash memory 324 among the multiple programs, and handles input and output to and from other device subsystems 342, among performing other operations.

Additionally, operators may interact directly with the operating system 357 through the display 222. Interactions may be facilitated by input devices, including the keyboard 232, auxiliary input/output device 328, and the display screen 222. While an example of the operating system 357 may be stored in the flash memory 324, the operating system 357 in other examples may be stored in a read-only memory (ROM) or similar storage element (not shown). As those skilled in the art will appreciate, the operating system 357, device program 358 (or parts thereof) may be loaded in a RAM 326 or other volatile memory. The flash memory 324 may be configured to support communication between the key function application 359 and a plurality of programs, including data entry applications 352, a personal information manager (PIM) 354, and a device state 350, among other programs. Additionally, the flash memory 324 may be configured to segregate communication between the programs 358 and other information 356.

Furthermore, the mobile communication device 103 may equipped for two-way communication within the wireless digital communication network 319. Digital signals may be sent and received from a mobile communication service. Examples of communication systems enabled for two-way communication include, but are not limited to, Long Term Evolution (LTE); General Packet Radio Service (GPRS) networks; Universal Mobile Telecommunication Service (UMTS) networks; Enhanced Data for Global Evolution (EDGE) networks; Code Division Multiple Access (CDMA) networks; High-Speed Packet Access (HSPA) networks; Universal Mobile Telecommunication Service Time Division Duplexing (UMTS-TDD) networks; Ultra Mobile Broadband (UMB) networks; Worldwide Interoperability for Microwave Access (WiMAX) networks, or other networks that can be used for combined data and voice capabilities or separate data and voice capabilities.

If the mobile communication device 103 is enabled as described above, or the digital communication network 319 includes such enablement, the two-way communication enabled mobile communication device 103 may be configured to both transmit and receive multimedia content and other data from the communication network 319. The communication transfer may be performed to or from the mobile communication device 103. In order to communicate with the communication network 319, the mobile communication device 103 may be equipped with an integral or internal antenna 318 that transmits signals to the communication network 319. Likewise, the mobile communication device 103 may be equipped with an additional antenna 316 for receiving communication from the communication network 319. According to one example, these antennae 316, 318 may be combined into a single antenna (not shown). As one skilled in the art will appreciate, the antenna or antennae 316, 318 may be externally mounted on the mobile communication device 103 in another example.

When equipped for two-way communication, the mobile communication device 103 may include the communication subsystem 311 that supports the operational needs of the mobile communication device 103. The communication subsystem 311 may include a transmitter 314 and a receiver 312 including an associated antenna or antennae 316, 318 as described above, local oscillators (LOs) 313, and a processing module that in the presently described example is a digital signal processor (DSP) 320.

It is contemplated that communication between the mobile communication device 103 and the wireless network 319 may be any type of communication that both the wireless network 319 and mobile communication device 103 are enabled to support. In general, these communications may be classified as voice and data communications. Voice communication generally refers to communication in which signals for audible sounds are transmitted through the communication network 319 by the mobile communication device 103. Data communication generally refers to all other types of communication that the mobile communication device 103 is capable of performing within the constraints of the wireless network 319.

FIGs. 1, 2 and 3 are examples only and those persons skilled in the art will appreciate that additional elements and modifications may be necessary to make the mobile communication device 103 operate in particular analog broadcast environments and digital network environments. The illustrated examples disclose the mobile communication devices 103 as smart phones. Alternative examples contemplate that the communication devices 103 may include personal digital assistants (PDA), tablet computers, laptop computers, or other communication devices capable of sending and receiving electronic messages. According to one example, the mobile communication devices 103 and the corresponding mobile communication device 300 structure may be characterized by an identification number that is assigned to the mobile communication device 103. According to one example, the identification numbers cannot be changed and are locked to each device.

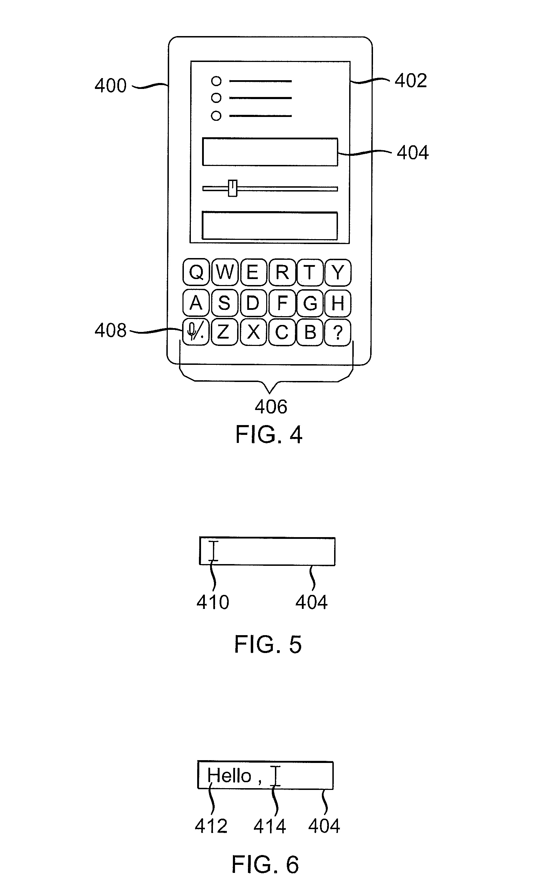

Having discussed various embodiments of mobile devices, as well as operating environments and communication networks within which such mobile devices can operate, the disclosure returns to modifying key behavior based on context and input associated with a user interface. FIG. 4 illustrates an example mobile communication device 400 having a graphical user interface on a display 402 and a keyboard 406 that can be a physical keyboard or a graphical, on-screen keyboard. The graphical user interface can include various interface elements, such as buttons, a textbox 404, a slider, and so forth. The keyboard 406 includes a key 408 with a default functionality mode and with the ability to switch between multiple functionality modes. In this example, key 408 toggles between a punctuation mark and launching voice input. Key 408 can have a default functionality mode, such as the period. The mobile device 400 relies on the assumption that the user is extremely unlikely to enter a period at a first position in the textbox. Thus, the mobile device 400 demotes the punctuation functionality and promotes the voice input functionality in that situation. While this example illustrates a physical keyboard, the system can also modify key functionality for virtual keys in an on-display keyboard. In this example, the mobile device 400 detects an onFocus event for a textbox 404, indicating that the textbox 404 has received focus. The textbox 404 can receive focus via a user tapping on textbox 404 in the case of a touch sensitive display, via a user selecting the textbox 404 via some other non-touch input, or via software or other automated selection of the textbox 404.

When the mobile device 400 detects the onFocus event, the mobile device 400 changes the functionality of the key 408, such as toggling between text entry and launching voice input. The mobile device 400 can trigger the change between functionality modes for the key 408 based on a set of rules. The rules can be predetermined; however, a user can provide new rules or can edit existing rules. Users can modify conditions that trigger a rule, to which key a rule applies, to which functionalities the conditions apply, and so forth. The rules can be tied to user interface context through performing specific events, such as an onFocus event for a textbox 404. Alternatively, the rules can be based on an analysis of contents of one or more user interface elements, such as analyzing a string entered in a text box. When a rule is tied to a specific event, the mobile device 400 can apply the rule each time the event is triggered. In an example of a rule that is based on content analysis, the mobile device 400 examines text the user is entering into the textbox 404. When the user has entered a comma, another immediately following comma is unlikely, so the mobile device 400 can temporarily repurpose the punctuation functionality to a different functionality, such as context functionality. In the context of a list application, the word 'and' may be entered in place of a second comma since the word 'and' is more likely to follow a comma. When the user double presses the comma key, the mobile device 400 temporarily repurpose the punctuation functionality to a context functionality. In other words, the key function application 359 monitors a user's actions and the context of the user's actions to enable different functions in response to a same action. Afterwards, the key function application 359 restores the punctuation functionality as the default functionality mode. However, the user may, after the comma key has been repurposed temporarily, press another key to select a different word or a different function. The key function application 359 can restore the comma key to its default functionality mode even if another key has been pressed. Thus, the rules can be simple or complex. Furthermore, the key function application 359 enables keys associated with applications running on the mobile device 400 to support a plurality of functions. Different rules can govern when to switch from a default mode and when to switch back to the default mode. The key function application 359 is configured to save space on the physical or virtual keyboard of the mobile device 400 by enabling one key to operate in a plurality of different modes for different applications, the modes being based on rules associated with a current use context of the graphical user interface and/or the mobile device 400.

According to another example, the mobile device 400 uses a single key to directly activate voice input in the context of a new input field or at the start of an input field, and can at a different time use that same key for a function that is contextually relevant once the user enters text in the input field. For example, the key function application 359 can repurpose any punctuation keys or other keys that a user is not likely to use to begin a text entry field with other functions, such as voice entry functions that launch a voice input routine. Other examples of keys that the user is not likely to use at the beginning of a text field include comma, period, exclamation point, question mark, slash, space bar, backspace, and so forth. In an extreme case of a text field limited to numeric input, the mobile device could toggle the functionality mode of every non-numeric key on the virtual keyboard.

After the voice input routine or other alternate functionality is launched, used, applied, executed or cancelled, for example, the key function application 359can restore the punctuation key to its original or default functionality mode of inserting the punctuation mark. In one embodiment, the key function application 359can change the functionality of multiple keys for different tasks, such as toggling a period to voice input functionality, toggling a comma to gesture input functionality, or toggling a spacebar to pasting into the text field from a copy buffer. Alternatively, the key function application 359 can change the functionality of multiple keys to the same functionality. For example, the mobile device could toggle functionality of the period, comma, and the spacebar so that pressing any of those keys launches the voice input.

FIGs. 5 and 6 illustrate an example text input box 404 in user interface 402 at different points in time according to one example embodiment. FIG. 5 shows the example text input box 404 at a first time. Cursor 410 is positioned at the far left and indicates that the text input box 404 is empty and ready to receive input. In this initial state, the period key is in its default or base functionality mode to type a period character. When focus is placed on the text input box, such as via a tap on a touchscreen or other selection, the graphical user interface event triggered by receiving focus can cause the key function application 359 to toggle the period key to an alternate functionality mode, such as a voice input mode. Thus, after the focus is on the text input box, if the user presses the period key, the mobile device starts voice recognition instead of inserting a period in to the text box 404. However, as shown in FIG. 6, if the user does not press the period key first, and instead enters some other text 412, moving the cursor 414 away from the first position, then the key function application 359 can restore the original functionality mode to the period key so that pressing the period key at a second time that is later than the first time inserts a period in to the text input box 414, as expected.

The rules governing which keys functionality can change, which events or conditions trigger changes in functionality, and other related behaviors can be assigned to the key function application 359, to a particular user interface element, or to a particular user profile, for example. A hierarchy of overlapping rules at various levels can operate simultaneously on the same or on different user interface elements. In an example of a rule assigned for a particular application, a rule assigned for a contact management application in a smartphone may cause the key function application 359 to repurpose one or more non-numeric keys to open a smartphone call history when the user taps in to a phone number field because a user is unlikely to enter non-numeric data into a phone number field. The rule can specify that the non-numeric keys remain 'repurposed' with the alternate functionality until the focus shifts to a different type of user interface element. In an example of a rule assigned to a particular user interface element, the key function application 359 can toggle a period key to a voice input mode when the user changes focus to any blank or empty text input field, because the user is unlikely to enter a period as the first character in a text input field. The rule can indicate that the period key reverts to its default functionality mode (i.e. inserting a period in the text input field) as soon as the user enters any character in the text input field. If focus shifts to a non-empty user interface element, the rule can indicate that the period key functionality mode remains unchanged.

In an example of a rule assigned to a particular user, a user of a multi-user device can save a profile indicating user-specific rules for how and which functionality and keys to switch. For example, a user can set up a custom, user-specific rule indicating that whenever focus shifts to a check box in a series of check boxes, the key function application 359 temporarily repurposes functionality of the space bar to check all boxes in the series of check boxes, and that the functionality of the I key is temporarily repurposed to invert the selections in the series of check boxes. The custom, user-specific rule can further indicate that when focus shifts away from the series of check boxes, the functionality of the space bar and the I key revert to their respective default or 'usual' modes. The key function application 359 on the multi-user device can then apply this rule only for that particular user or other users with which the user has shared the rule. This can allow for a high level of customization for each user of the same device to tailor the device to the workflow of each user. Similarly, such custom rules can be associated with user groups. User-specific rules, application-specific rules, and user interface element-specific rules can co-exist and operate in layers so that rules from multiple sources can operate simultaneously. Certain rules can supersede others, such as a custom, user-specific rule overriding a contradicting application-specific rule. In one variation, user-specific rules are stored in a network-based profile so that a user can access the rules from any network-enabled device.

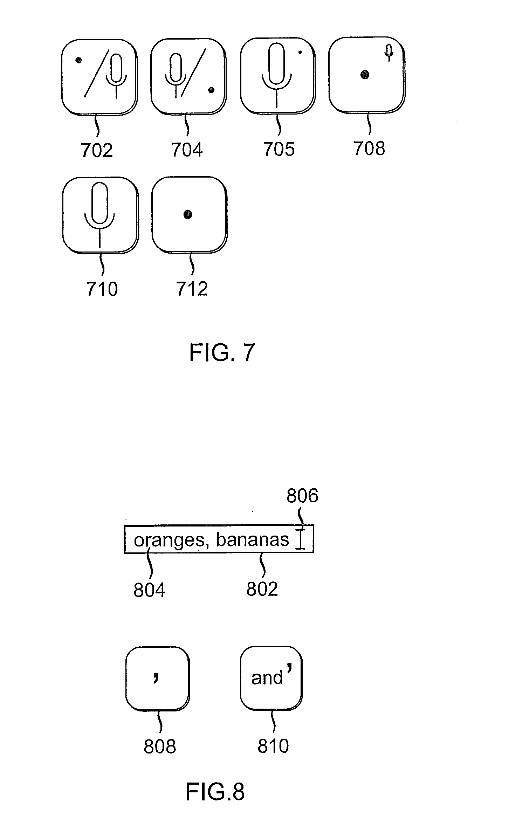

FIG. 7 illustrates example graphical buttons or keys in a virtual on-display keyboard in various operating modes. The keys can be physical keys with some form of display integrated in to the key tops, or can be virtual keys. Key 702 and key 704 each show a split display illustrating which functionalities are available, i.e. a period key and microphone representing voice input. The split display can indicate not only the two functionality modes, but can indicate which is active, such as by presenting the active functionality mode on top, or with some animation or color feature. Key 706 and key 708 show a similar indication of two functionality modes, but where the active functionality mode is larger and in a central location within the button. In one variation, the inactive functionality mode is grayed out or otherwise graphically indicated as inactive. Key 710 and key 712 illustrate the scenario in which the key displays only the active functionality mode and completely hides the inactive functionality mode. These keys 702-712 are example graphical displays, and other types of displays and other arrangements of graphical elements can be substituted for the illustrated keys.

The key can display both active and inactive functionality modes and the key function application 359 can switch the primary or default function as the user enters text, or the device may only display the primary functionality mode on the key even though the functionality mode switches. In addition to switching the key functionality mode based on rules and context or events in the user interface, the user can manually switch between functionality modes through a symbol screen or alternate character function, for example. In the case of a physical keyboard, the punctuation symbol on the key top may be fixed or printed. In this case, the device can teach the user how to access directly the alternate functionality mode, such as voice input, at the beginning of a text input field, for example. In some scenarios, a user may desire to use a functionality mode that is not currently active for a particular key. The user can access that functionality mode by pressing and holding on the key, by double tapping the key, by pressing the key and reversing the unintended functionality (such as be cancelling a voice input prompt or deleting a comma), and so forth. The user interface can provide indications or instructions to the user for how to access the inactive functionality mode. In another variation, the system provides access the inactive functionality mode redundantly, by exposing the inactive functionality as a function on a symbol screen, such as for either the comma or voice control or both.

FIG. 8 illustrates an example text input box 802 with different views 808, 810 of a key at different times. Before a user taps in to the text input box 802, the key appears as key 808 indicating only the default functionality of typing a comma character. As the user enters the text "oranges, bananas," 804 in the text input box, the cursor 806 indicates that the device is awaiting additional text input at that location. The key function application 359 analyzes the contents of the text input box 802 to determine that the user has formed a comma-separated list of items. Thus, when the user enters a comma, such as the final comma in the entered text 804, the key function application 359 can determine that the user is unlikely to enter a second comma at that point. Relying on this determination, the key function application 359 can repurpose the functionality of the comma key to a context functionality and may insert the word "and" instead of a second comma. In this way, the user can simply hit the comma key again to insert the entire word "and" in the list of items, thereby saving key strokes. The device can temporarily update the appearance of the key 808 to key 810, which indicates the word "and" and can provide an optional indication of the temporarily demoted default functionality of entering a comma.

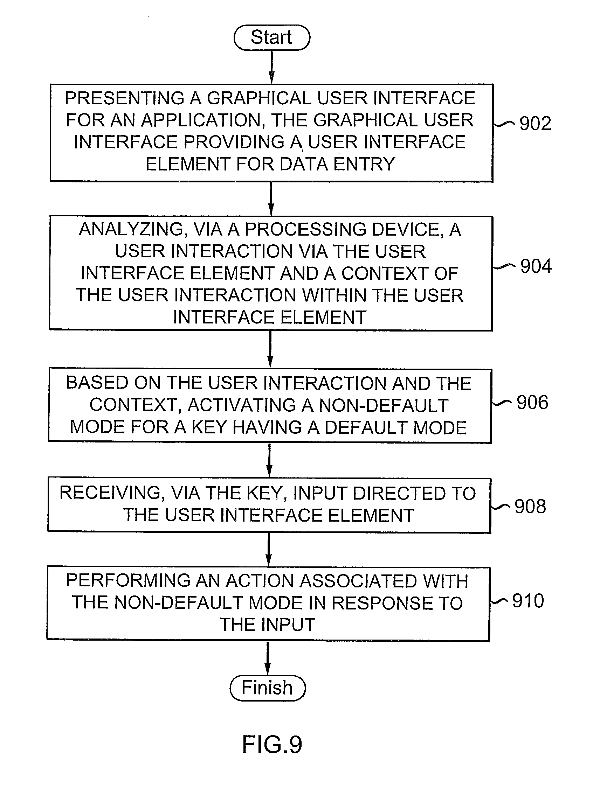

FIG. 9 illustrates a flow chart depicting a method of alternating an operating mode of a key based on context. A system with modules configured to perform the method can examine the context and content of the user interactions to determine whether a rule applies to change the functionality mode of one or more keys. The system presents a graphical user interface for an application and the graphical user interface provides a user interface element for data entry (902). The system analyzes a user interaction via the user interface element and a context of the user interaction within the user interface element (904). The user interaction can be one of a click or a tap and the context of the user interaction can be selecting a text entry field in the graphical user interface.

Based on the user interaction and the context, the system activates a non-default mode for a key having a default mode, wherein the context indicates a low likelihood of user intent to activate a default mode for the key (906). The key can be a physical key or a virtual on-screen key. The default mode can be inserting a punctuation mark, and the non-default mode can be receiving voice input. The system can effectively toggle the key between the default mode and the non-default mode based on the context and the user interaction. The system can activate the default or non-default modes based on one or more context rules. The system can further update an appearance of the key based on which mode is active for the key. The rules can further guide how the system updates the appearance of the key. For example, the system can render an image representing the default mode and the non-default mode that indicates which mode is currently active for the key.

The system receives, via the key, input directed to the user interface element (908). The system performs an action associated with the non-default mode in response to the input (910). In other words, the system receives a key press via the key and processes the key press based on which mode was active when the key was pressed. After any key press or other user action, whether directed to the key or to some other key, the system can restore the key to its default mode.

The disclosure may be implemented using hardware or software in association with hardware. In some examples, the software may include firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the disclosure may take the form of a computer program product that includes program modules accessible from computer-usable or computer-readable medium storing program code for use by or in connection with one or more computers, processors, or instruction execution system. The medium can be an electronic, magnetic, optical, electromagnetic, infrared, or semiconductor system (or apparatus or device) or a propagation medium (though propagation mediums in and of themselves as signal carriers are not included in the definition of physical non-transitory computer-readable medium). Examples of a physical non-transitory computer-readable medium include a semiconductor or solid-state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art.

A data processing system suitable for storing a computer program product of the technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem and Ethernet cards are just a few of the currently available types of network adapters. Such systems can be centralized or distributed, e.g., in peer-to-peer and client/server configurations. In some examples, the data processing system is implemented using one or both of FPGAs and ASICs.

## Claims

1. A method comprising:
rendering (902) a graphical user interface for an application on a display (222), the graphical user interface including a user interface element for data entry;
analyzing (904) a user interaction via the user interface element and a context of the user interaction within the user interface element;
based on the user interaction and the context, activating (906) a non-default mode for a key (232) having a default mode, the context indicating a low likelihood of user intent to activate a default mode for the key (232);
receiving (908), via the key (232), input directed to the user interface element; and
performing (910) an action associated with the non-default mode in response to the input.

2. The method of claim 1, wherein the key (232) is one of a physical key (232) or a virtual on-screen key.

3. The method of any of claims 1-2, wherein the default mode comprises inserting a punctuation mark, and the non-default mode comprises receiving voice input.

4. The method of any of claims 1-3, further comprising:
toggling the key (232) between the default mode and the non-default mode based on the context and the user interaction.

5. The method of any of claims 1-4, wherein activating the non-default mode for the key (232) is further based on a context rule.

6. The method of any of claims 1-5, further comprising:
updating an appearance of the key (232) based on which of the default mode or the non-default mode is active for the key (232).

7. The method of any of claims 1-6, further comprising:
receiving a key press via the key (232) at a first time; and
processing the key press based on which mode was active at the first time.

8. The method of any of claims 1-7, further comprising:
rendering an image representing the first function and the second function that indicates which of the first function or the second function is currently active for the key (232).

9. The method of any of claims 1-8, wherein the user interaction is one of a click or a tap and the context of the user interaction is selecting a text entry field in the graphical user interface.

10. The method of any of claims 1-9, further comprising:
based on user interaction, toggling the key (232) between the default mode and the non-default mode.

11. The method of any of claims 1-10, further comprising:
toggling the key (232) between the default mode and the non-default mode based on the context and the user interaction.

12. An electronic device (103) comprising:
a processor (338) that communicates with a computer-readable storage medium (324) having instructions stored thereon, the processor (338) being configured to execute instructions of the method as recited in any one of claims 1-11.

13. A non-transitory computer-readable storage medium (324) comprising instructions that, when executed by a processor (338), cause the processor (338) to execute the method as recited in any one claims 1-11.
